Europäisches Patentamt

European Patent Office

Office européen des brevets

(19)

(11) Publication number: 0 099 408
B1

(12) EUROPEAN PATENT SPECIFICATION

(45) Date of publication of patent specification: 13.01.88

(21) Application number: 83901900.7

(22) Date of filing: 17.01.83

(86) International application number:
PCT/US83/00069

(87) International publication number:
WO 83/02522 21.07.83 Gazette 83/17

(51) Int. Cl.⁴: **H 01 F 7/22**, G 21 B 1/00,
H 01 F 27/28

(54) COMPOSITE COILS FOR TOROIDAL FIELD COILS AND METHOD OF USING SAME.

(30) Priority: 15.01.82 US 340206
15.01.82 US 340237

(43) Date of publication of application:
01.02.84 Bulletin 84/05

(45) Publication of the grant of the patent:
13.01.88 Bulletin 88/02

(84) Designated Contracting States:
AT BE CH DE FR GB LI LU NL SE

(56) References cited:
JP-A-53 072 995
US-A-4 066 496
US-A-4 174 254
US-A-4 207 451
US-A-4 268 353
US-A-4 277 768

CRYOGENICS; vol. 20, no. 2, February 1980,
pages 59-74, IPC Business Press, Surrey, GB
J.R. POWELL et al.: "DEALS: a demountable
superconducting magnet system for fusion
reactors"

(73) Proprietor: FDX Patents Holding Company, N.V.
c/o Penthouse International, Ltd. 1965
Broadway
New York, N.Y. 10023-5965 (US)

(72) Inventor: PERKINS, Roger G.
2014 Shady Tree Lane
Encinitas, CA 92024 (US)
Inventor: TRUJILLO, Stephen, M.
5931 Bellevue Avenue
La Jolla, CA 92037 (US)
Inventor: ROSENWASSER, Stuart N.
P.O. Box 2407
Rancho Santa Fe, CA 92067 (US)
Inventor: AMTMANN, Hans H.
P.O. Box 714
Rancho Santa Fe, CA 92067 (US)

(74) Representative: Kador . Klunker . Schmitt-Nilson
. Hirsch
Corneliusstrasse 15
D-8000 München 5 (DE)

Courier Press, Leamington Spa, England.

(56) References cited:

IEEE TRANSACTIONS ON NUCLEAR SCIENCE,
vol. NS-16, no. 3, part I, June 1969, pages
728-733 J. ALLINGER et al.: "High field iron
magnets for operation at cryogenic
temperatures"

IEEE SPECTRUM, August 1966, pages 111-114
D.B. HMONTGOMERY: "High-strenght
conductors for supermagnets"

Proceedings of Sixth Symposium on
Engineering Problems of Fusion Research, pp.
366-369, 496-498, 623-630, IEEE Pub. No. 75 CH
1097-5-NPS (11/75)

## Description

The present invention relates to a composite magnetic coil winding comprising at least two conductor segments, a first of said segments defining a first circumferential portion of said coil winding and a second of said segments defining a second circumferential portion of said coil winding. The present invention also relates generally to toroidal reactors for producing fusion reactions; particularly, the invention relates to toroidal field coil windings for reactors.

Prior art tokamak fusion reactor (TFR) concepts were directed to large machines with blanket and shield elements positioned in between the plasma fusion region of the TFR and the large superconducting toroidal field (TF) coils. It has been suggested a small machine with the blanket means positioned external to the normally conducting TF coil assembly. It is known in the art that such blankets can advantageously use the neutrons generated in the fusion plasma to breed new fuel, to produce thermal energy and to create additional energetic reactions. This invention is directed to those TFRs utilizing external blankets.

In the case where a TFR uses the deuterium-tritium (d, t) reaction, approximately 80% of the energy output is in the form of the kinetic energy of fast neutrons. In the small machine referred to above the TF coil is exposed to the flux. The neutron radiation damage and heat loads preclude the use of superconducting materials for the TF coils in this small machine design.

In accordance with the pre-characterizing clause of claim 1 JP—A—53072995 discloses a composite magnetic coil winding in which both circumferential portions of the coil winding are comprised of the same material.

The applicant has found that aluminum has the advantage that energetic neutrons passing through it suffer very much less absorbtion and very much less energy loss than when they pass through copper. Another advantage of aluminum is that it is not activated by exposure to neutrons as much as copper and what radio-active elements are formed are shorter lived. On the other hand, copper or a copper alloy is preferably the material being disposed nearest the center of a fusion reactor since in this position the current density and the mechanical stresses imposed on the coil are the greatest.

In accordance with the characterizing clause of claim 1, the first circumferential portion of the coil winding comprises a copper material and the second circumferential portion comprises an aluminum material. The segments are joined at an electrically conducting joint having high mechanical strength and low electrical resistance.

Applicants have found that the materials used in the TF coils must have both high electrical conductivity to carry the high currents necessary to generate the TF and also high tensile strength to withstand the forces accompanying the strong magnetic fields. Applicants have found that TF coils of high electrical conductivity can be made from high strength copper alloys. However, inasmuch as in the small TFR design, the TF coil surrounds the plasma region, the neutrons created as a result of the fusion reactions must pass through it. In this regard, it has been found by applicants that copper and copper alloys coils will absorb a considerable fraction of the neutrons and that those that do emerge without being absorbed in the TF coils will have lost much of their kinetic energy in the copper or copper alloy TF coils.

While it is a feature of the TFR design to remove the energy deposited in the TF coils and recover it as useful heat, energetic neutrons are far too valuable for breeding fuel for fusion and fission reactors and for generating high temperature heat in the blanket to be used merely as a source of low temperature heat in the TF coils.

Applicants have also found that one of the consequences of the TFR geometry is that the current density and mechanical stresses imposed on the TF coils are much greater in the region of the inner part of the TF coil, the region nearest the center or the main axis of the machine. Another consequence of the XBTFR geometry is that most of the neutrons generated in the fusion plasma exit through the outer part of the TF coil or the region farthest from the central or main axis of the TFR.

In accordance with the present invention, it is possible to provide improved neutron economy, reduced TF coil nuclear heating and heating gradiants and reduced activation. Moreover, the nuclear heating load is shifted from the magnets, coil and supporting structures to the surrounding media (e.g., blankets).

Specific and preferred embodiments of the invention are defined in the subclaims.

It is preferred that alloys of Cu and Al be utilized rather than the pure metals in order to achieve necessary strength and other mechanical properties. In particular, copper beryllium, copper beryllium-nickel and MZC (Mg-Zr-Cr) copper alloys are preferred.

The most important consideration for the selection of the particular Al alloy is its mechanical strength. Preferably alloys in the 2000, 6000 and 7000 series due to their strength are utilized. Aluminum reinforced with graphite or carbon may also be used. It should be understood that lower strength Al alloys can be utilized in some of the lower stressed areas of the coils. It should be further understood that some alloying elements of aluminum (e.g., Fe and Ni) will result in increased activation compared to pure Al. However, the Al alloys still retain the property of being more transparent to neutrons than copper alloys, thus enhancing neutron economy by about the same magnitude as if pure Al were used.

## Brief Description of the Drawings

The accompanying drawings illustrate the present invention and together with the description and the rest of the specification, serve to explain the principles of the invention. In the drawings:

Figure 1A is a plane view of a typical segmented coil winding;

Figure 1B is a partial top view of a plurality of coil windings;

Figure 2A is a partial plane view of a coil showing a coil segment joint in accordance with the present invention;

Figure 2B is a partial plane view of a coil showing another embodiment of a coil segment joint in accordance with the present invention;

Figure 2C is a plane partial view of a coil showing another embodiment of a coil segment joint in accordance with the present invention;

Figure 3 is a plane partial view of a coil showing another embodiment of a coil segment joint in accordance with the present invention;

Figure 4 is a plane partial view of a coil showing another embodiment of a coil segment joint in accordance with the present invention;

## Detailed Description of the Invention

Reference will now be made in detail to the present preferred embodiment of the invention, an example of which is illustrated in the accompanying drawing.

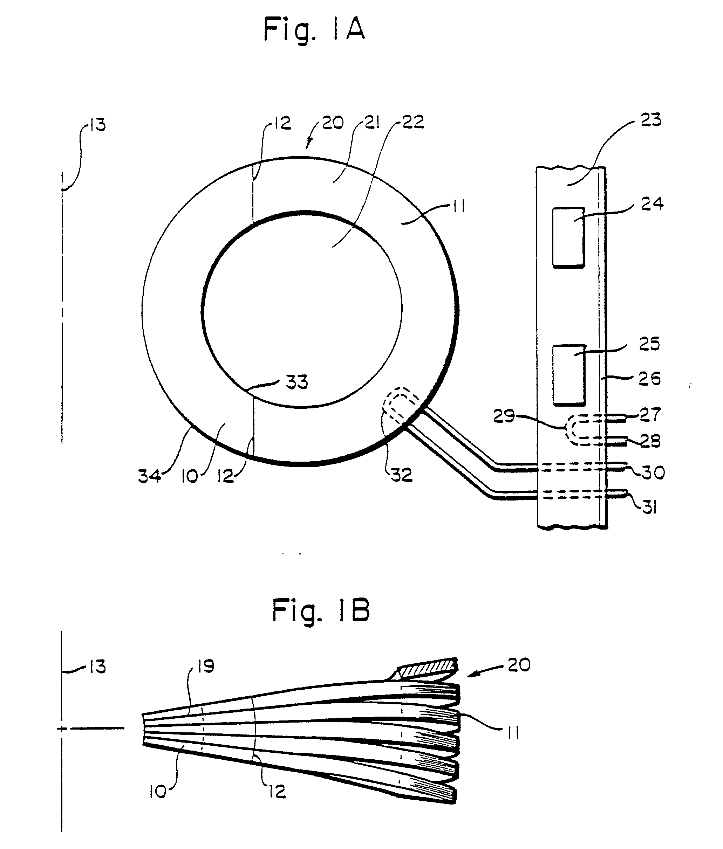

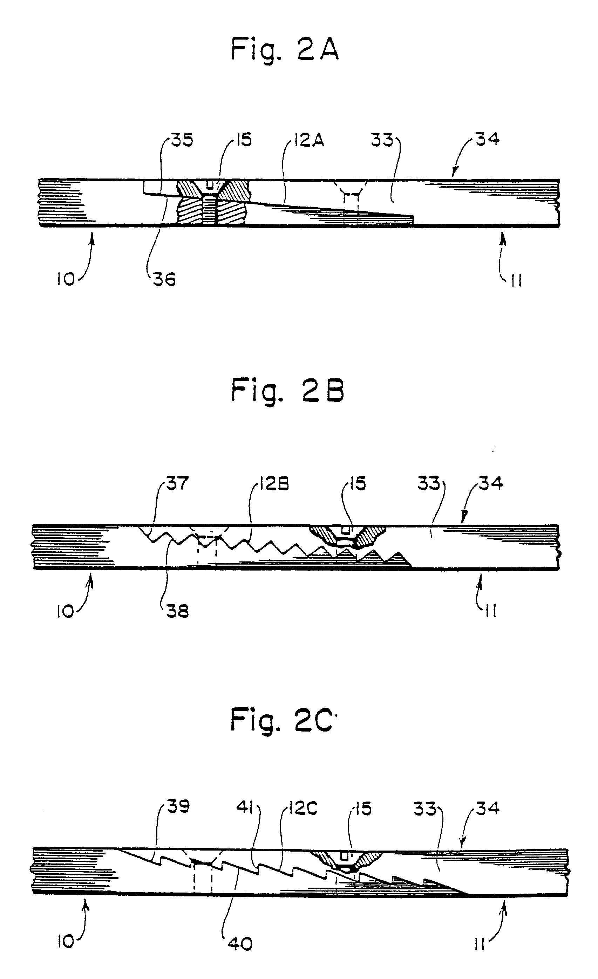

Figure 1A is a plane view of a typical segmented coil in accordance with the present invention. Segment 10 of the TF coil 21 is preferably made of copper or copper alloy and is located on the side of the TF coil closest to the main axis 13 of the TFR. Preferably, the segment 11 is made of aluminum or aluminum alloy and is located on the side of the TF coil farthest from the main axis 13 of the TFR. Region 22 in Figure 1A is the toroidal plasma region. The segments 10 and 11 of the coil 21 are joined at joint 12 which is more fully described in connection with Figures 2A—C, 3 and 4 below.

As can best be appreciated from Figure 1B, TF coil 21 is only one of a plurality of TF coils that together form the TF generating means 20. The TF coils 21 are insulated from each other with a layer of insulation 19. Preferably, in the region where the adjacent TF coils are in physical contact with each other (on the side closest to the major axis of the TFR), the layer of insulation is the only material separating the adjacent TF coil windings.

It should be understood that in accordance with one aspect of this invention, the blanket means 23 and the shielding means 26 are positioned radially outside of the TF coils 21 from the plasma fusion region 22 and as will be appreciated by one of skill in the art, the blanket may contain a region 24 for breeding tritium as fuel for fusion reactors and/or a region 25 for breeding fissile fuel for fission reactors. The blanket means is also heated by nuclear heating caused by fusion neutrons from the fusion reactions which may occur in the fusion plasma region 22.

The blanket means is cooled with coolant from feed line 27, which passes through coolant channels 29 in the blanket and to the coolant return line 28. The TF coils are also cooled with coolant from feed line 30, through TF coolant channels 32 and to the coolant return line 31. Coolant means for the TF coils and blanket are well known in the art and do not form a part of the instant invention.

Applicants have found that the joints 12 between the coil segments 10 and 11 must preferably meet the following requirements:

1. Preferably, their mechanical strength in tension and their fatigue endurance must be as great or nearly as great, as that of the weaker of the two metals (aluminum in this case).

2. Preferably, the electrical resistance must be sufficiently small that they are not excessively heated by $I^2R$ losses.

3. Preferably, they must be sufficiently compact to fit the geometry of the XBTFR. More particularly, they must not protrude from the broad sides of the conductor segments or from the inner edge of the segments facing the plasma fusion region.

4. Preferably, they must not interfere with the removal of heat from the TF coils in their vicinity by the cooling system.

Applicants have found that the preferable types of joints that meet these requirements are mechanical joints and metallurgical joints. As will be apparent to one of skill in the art, the metallurgical joints may preferably include soldered joints, brazed joints, fusion welded joints or solid state bonded joints.

Preferably, in the case of a mechanical joint, the contact area of the joint is much larger than the cross-sectional area of the conductor segments so as to minimize the electrical resistance of the joint.

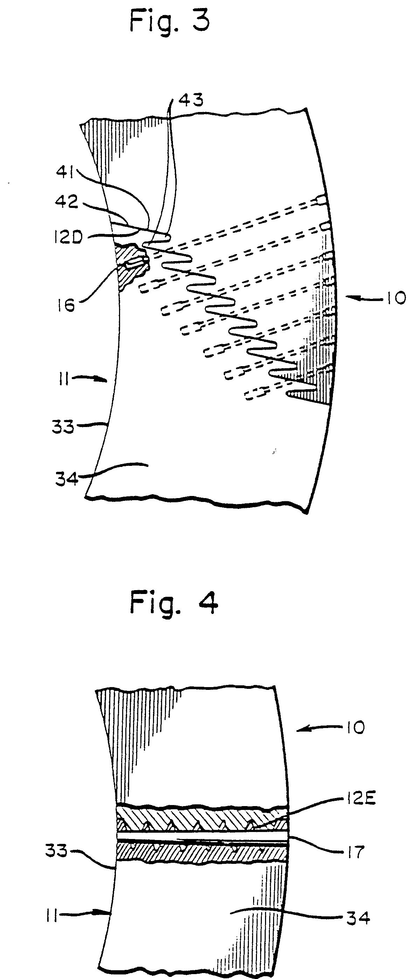

In accordance with the present invention, the joints can be formed parallel to the face 33 of the TF coils 21 as in Figures 2A—2C or they can be in the broad plane 34 of the TF coils 21 as shown in Figure 3 and Figure 4. It should be understood that any of the joints formed in accordance with the present invention can be formed either parallel to the face 33 of the TF coil 21 or in the broad plane 34 of the TF coil 21.

Preferably, one way to achieve the necessary mechanical joint is depicted in Figure 2A. The joint consists of an angled lap joint 12A held together by one or more fastening means 15, preferably screws. An angled lap joint can alternately be formed in the broad plane 34 of the TF coil 21. This joint will, with sufficiently large clamping pressure, achieve the necessary low electrical resistance. The tensile stresses of the joint are transmitted by friction between the contacting surfaces 35 and 36 and by the shearing force on the fastening means 15.

Alternately, the facing surfaces 37 and 38 can be serrated as depicted in Figure 2B with serrations formed of alternating positive and negative angular surfaces. Of course, it should be understood that the angles of the adjacent surfaces forming the serrations can be varied over any amount desired and the angle of the serration need not remain constant throughout the length of the joint. It should also be appreciated that adjacent legs along the serrated surface need not be of equal length but can be different. Preferably, however, the facing surfaces 37 and 38 are negative images of each other to provide good contact mating. In Figure 2C a variation on the serrated surface of Figure 2B is depicted wherein one side of each pair of angled surfaces forming the serrations has a portion 41 vertical to the broad plane of the TF coil 21 and an angled portion 40 that extends between consecutive vertical portions.

Preferably, the joints 12 should be located in a portion of the coil 21 where adjacent coils are separated only by a layer of insulation 18. In those locations the magnetic forces will act to compress the joint thereby reducing the number and size of the fasteners needed to provide the requisite compressive load.

It will be apparent to one skilled in the art that the serrated joints described above and depicted in Figures 2B and 2C can alternately be placed in the broad plane 34 of the conductors.

As depicted in Figures 3 and 4, and as discussed above, the joints 12D (in Figure 3) and 12E (in Figure 4) may also preferably be positioned in the broad plane 34 of the coil winding as opposed to the joints illustrated in Figures 2A, 2B and 2C wherein the joints were positioned parallel to the winding face 33. In the embodiment of Figure 3, the tensile load on the coil winding 21 is carried by the interlocking teeth 43, the fastening means 16 serving simply to hold the conductor portions in the correct relative orientation. The fastening means 16 may preferably constitute countersunk screw or bolt members that are configured so as not to protrude outside of the smooth contour of the TF coil 21. The contact force required for good electrical conductance is provided by the tensile force, transmitted as a compressive load, across the interlocking tooth surfaces 43.

Depicted in Figure 4 is an alternate embodiment of the interlocking tooth joint. In the embodiment of Figure 4, the joint is again positioned in the broad plane 34 of the TF coils and preferably is positioned so as to traverse the TF coil 21 generally along a radius of the coil. As a fastening means, a tapered pin 17 may be used, the pin tapering inward toward the inner face of the TF coil 21. In this embodiment, it will be understood by one of skill in the art, both the tensile and compressive contact load are carried by shearing forces in the tapered pin.

Several metallurgical fabrication processes may preferably be used to achieve suitable joints 12 for the TF coils 21. It has been found that suitable joints may be formed by one or more of the following processes: welding; including but not limited to gas-metal arc welding; gas-tungsten arc welding; plasma arc welding; shielded metal arc welding; electron beam or laser beam fusion welding; seam or flash resistance welding; bonding, including but not limited to pressure, diffusion, explosive, ultrasonic, magnetic, friction or roll bonding; soldering or brazing using filler metals.

In the case of a metallurgical joint, the electrical resistance of the joint will be no greater than that of the parent metals, thus as will be understood, it is not necessary for electrical conduction reasons that the joints have a large contact area. However, as will be readily appreciated by the artisan, a relatively small surface area joint may be mechanically weaker than the parent metals. Therefore, it is preferable to use a large area joint, such as the lap joint of Figure 2A or such other large area joints as this description will suggest to the artisan, to spread the mechanical load over an area much larger than the cross-sections of the TF coil, thereby reducing the local stress on the joint. Of course, it should be understood that with a metallurgical joint, the fastening means, which may preferably be countersunk screws as illustrated in Figures 2A—2C, could be dispensed with. Of course, in the case of the large area interlocking tooth joint that utilizes a tapered pin such as that depicted in Figure 4, the tapered pin could be eliminated if a metallurgical joint were formed.

## Claims

1. A composite magnetic coil winding (21) comprising at least two conductor segments (10, 11), a first (10) of said segments defining a first circumferential portion of said coil winding and a second (11) of said segments defining a second circumferential portion of said coil winding, characterized in that the first circumferential portion comprises a copper material and the second circumferential portion comprises an aluminum material and that said segments are joined at an electrically conducting joint having high mechanical strength and low electrical resistance.

2. The composite magnetic coil winding of claim 1, wherein said coil winding (21) has a generally smooth and continuous surface and wherein said joint (12) does not protrude from said surface.

3. The composite magnetic coil winding of claim 1, wherein said coil winding (21) has means (30, 31, 32) for removing heat from said coil winding and wherein said joint (12) does not interfere with said heat removal means.

4. The composite magnetic coil winding of claim 1, wherein said joint (12) is a mechanical joint.

5. The composite magnetic coil winding of claim 1, wherein said joint (12) is a metallurgical joint.

6. The composite magnetic coil winding of claim 1, wherein said copper material is a copper alloy.

7. The composite magnetic coil winding of claim 1, wherein the aluminum material is an aluminum alloy.

8. The composite magnetic coil winding of claim 1, wherein said coil winding (21) is part of a toroidal magnetic field generating means (20) for generating a toroidal magnetic field in a toroidal reactor for producing fusion reactions.

9. The composite magnetic coil winding of claim 8, wherein said toroidal reactor has a main axis (13) and said copper material segment (10) is positioned on a side of said toroidal field generating means (20) nearest said main axis (13) and said aluminum material segment (11) is positioned on an opposite side of said toroidal field generating means (20), farthest from said axis (13).

10. The toroidal reactor of claim 8, wherein said copper material is a copper alloy from the group consisting of copper beryllium and Mg-Zr-Cr-copper and the aluminum material is an aluminum alloy from the group consisting of the 2000, 6000 and 7000 series of aluminum alloys.

## Patentansprüche

1. Zusammengesetzte Magnetspulenwicklung (21) mit mindestens zwei Leitersegmenten (10, 11), von denen ein erstes Segment (10) einen ersten Umfangsabschnitt der Spulenwicklung und ein zweites Segment (11) einen zweiten Umfangsabschnitt der Spulenwicklung definiert, dadurch gekennzeichnet, daß der erste Umfangsabschnitt ein Kupfermaterial aufweist und der zweite Umfangsabschnitt ein Aluminummaterial aufweist, und daß die Segmente an einer elektrisch leitenden Verbindung hohe mechanischer Festigkeit und niedrigen elektrischen Widerstands verbunden sind.

2. Zusammengesetzte Magnetspulenwicklung nach Anspruch 1, bei der die Spulenwicklung (21) eine im allgemeinen glatte und durchgehende Oberfläche besitzt, und bei der die Verbindung (12) nicht von der Oberfläche vorsteht.

3. Zusammengesetzte Magnetspulenwicklung nach Anspruch 1, bei der die Spulenwicklung (21) Mittel (30, 31, 32) aufweist zum Abführen von Wärme aus der Spulenwicklung, und bei der die Verbindung (12) nicht mit den Wärmeableitungsmitteln überlappt ist.

4. Zusammengesetzte Magnetspulenwicklung nach Anspruch 1, bei der die Verbindung (12) eine mechanische Verbindung ist.

5. Zusammengesetzte Magnetspulenwicklung nach Anspruch 1, bei der die Verbindung (12) eine metallurgische Verbindung ist.

6. Zusammengesetzte Magnetspulenwicklung nach Anspruch 1, bei der das Kupfermaterial eine Kupferlegierung ist.

7. Zusammengesetzte Magnetspulenwicklung nach Anspruch 1, bei der das Aluminiummaterial eine Aluminiumlegierung ist.

8. Zusammengesetzte Magnetspulenwicklung nach Anspruch 1, bei der die Spulenwicklung (21) Teil einer Toroid-Magnetfeld-Erzeugungseinrichtung (20) zum Erzeugen eines Toroid-Magnetfelds in einem Toroidreaktor zur Erzeugung von Fusionsreaktionen ist.

9. Zusammengesetzte Magnetspulenwicklung nach Anspruch 8, bei der der Toroidreaktor eine Hauptachse (13) besitzt und das Kupfermaterial-Segment (10) auf der Seite der Toroid-Feld-Erzeugungseinrichtung (20) positioniert ist, die der Hauptachse (13) am nächsten liegt, und das Aluminiummaterial-Segment (11) auf der von der Achse (13) am weitesten entfernten, gegenüberliegenden Seite der Toroid-Feld-Erzeugungseinrichtung (20) gelegen ist.

10. Toroid-Reaktor nach Anspruch 8, bei dem das Kupfermaterial eine Kupferlegierung aus der aus Kupfer-Beryllium und Mg-Zr-Cr-Krupfer bestehenden Gruppe ist und das Aluminiummaterial eine Aluminiumlegierung aus der Gruppe ist, die aus den 2000-, 6000- und 7000-Reihen von Kupferlegierungen besteht.

## Revendications

1. Une spire composite de bobine magnétique (21) comportant au moins deux segments conducteurs (10, 11), un premier (10) desdits segments définissant une première partie circonférentielle de ladite spire de bobine et un second (11) desdits segments définissant une seconde partie circonférentielle de ladite spire de bobine, caractérisée en ce que la première partie circonférentielle comporte un matériau cuivreux et la seconde partie circonférentielle comporte un matériau alumineux et en ce que lesdits segments sont reliés selon un joint conducteur électrique présentant une résistance mécanique élevée et une résistance électrique faible.

2. La spire composite de bobine magnétique selon la revendication 1, dans laquelle ladite spire de bobine (21) présente une forme généralement lisse et continue et dans laquelle ledit joint (12) ne fait pas saillie par rapport à ladite surface.

3. La spire composite de bobine magnétique selon la revendication 1. dans laquelle ladite spire de bobine (21) comporte des moyens (30, 31, 32) d'évacuation de la chaleur de ladite spire de bobine et dans laquelle ledit joint (12) ne vient pas interférer avec lesdits moyens d'évacuation de la chaleur.

4. La spire composite de bobine magnétique selon la revendication 1, dans laquelle ledit joint (12) est un joint mécanique.

5. La spire composite de bobine magnétique selon la revendication 1, dans laquelle ledit joint (12) est un joint métallurgique.

6. La spire composite de bobine magnétique selon la revendication 1, dans laquelle ledit matériau cuivreux est un alliage de cuivre.

7. La spire composite de bobine magnétique selon la revendication 1, dans laquelle le matériau alumineux est un alliage d'aluminium.

8. La spire composite de bobine magnétique selon la revendication 1, dans laquelle ladite spire de bobine (21) est une partie de moyens générateurs (20) de champ magnétique toroïdal destiné à engendrer un champ magnétique toroïdal dans un réacteur toroïdal afin de produire des réactions de fusion.

9. La spire composite de bobine magnétique selon la revendication 8, dans laquelle ledit réacteur toroïdal présente un axe principal (13) et ledit segment (10) en matériau cuivreux est disposé sur une face desdits moyens (20) générateurs de champ toroïdal la plus proche dudit axe principal (13) et ledit segment en matériau alumineux (11) est disposé sur la face opposée desdits moyens générateurs de champ toroïdal (20), les plus éloignés dudit axe (13).

10. Le réacteur toroïdal selon la revendication 8, dans lequel ledit matériau cuivreux est un alliage de cuivre choisi dans le groupe consistant en cuivre au béryllium et en cuivre au Mg-Zr-Cr et le matériau alumineux est un alliage d'aluminium choisi dans le groupe constitué par les séries 2000, 6000 et 7000 des alliages d'aluminium.

## Fig. IA

## Fig. IB

## Fig. 2A

## Fig. 2B

## Fig. 2C

## Fig. 3

## Fig. 4